# EUROPÄISCHE PATENTSCHRIFT

(11) **EP 0 862 968 B1**
(45) Veröffentlichungstag und Bekanntmachung des Hinweises auf die Patenterteilung: **07.05.2003**
(21) Anmeldenummer: 98102844.2
(22) Anmeldetag: 19.02.1998
(51) Int. Cl.: B23Q 7/05, B23Q 7/14

(54) **Anlage zur kontinuierlichen Bearbeitung und Bohrung von Glasplatten**
Installation for continuous working and drilling of glass sheets
Installation pour le traitement et perçage continue de feuilles de verre

(30) Priorität: 25.02.1997 IT MI970402
(43) Veröffentlichungstag der Anmeldung: 09.09.1998
(73) Patentinhaber: CMB Costruzioni Meccaniche Besana S.r.l., 21033 Cittiglio, (Varese) (IT)
(72) Erfinder: Besana, Annibale, Laveno (Varese) (IT)
(74) Vertreter: Jaumann, Paolo

(56) Entgegenhaltungen:
- EP-A- 0 709 164
- DE-U- 29 607 218
- US-A- 4 533 073
- US-A- 4 579 483

## Beschreibung

In der Bearbeitung von Glasplatten, waehrend der Schliff sich, auf Grund seiner Arbeitsweise, einer kontinuierlichen Herstellung mit gleichmaessiger Vorschubgeschwindigkeit eignet, verursacht die Bohrung, d.h. die nachfolgende Phase, ein Problem in der Anpassung an der Vorschubgeschwindigkeit der Bearbeitungssstrasse, das auf die Blockierung der Platte fuer die Dauer der Bohrung zurueckzufuehren ist. Bei dem jetzigen Stand der Technik, sind die moeglichen Loesungen entweder die Bohrung ausserhalb der Bearbeitungsstrasse oder die Verlangsamung der Voschubgeschwindigkeit des Schliffes, oder das periodische Herausnehmen aus der Strasse von einigen Platten, zur Erzeugung von fuer die Bohrung benutzbaren Zeitabstaenden.

In der EP-0 709 164 wird eine Anlage zur Bearbeitung von Glasscheiben beschrieben, mit mindestens einer Bohrstation mit einem Zubringer, wobei der Zubringer als verschiebbarer Wagen mit einem drehbaren Träger, z. Bsp. Sangteller, ausgebildet ist. Eine zentrale Steuerung nach einem bestimmten Programm ist ebenfalls vorgesehen.

Die Anlage gemäß EP-0 709 164 ist konstruktiv, insbesondere was das Vorschubsystem betrifft, sehr aufwendig.

Dieser Erfindung steht die Aufgabe zu Grunde, eine solche Anlage zu schaffen, die die Übergabe zwischen der Transfervorrichtung und der Bohrmaschine veinfacht, ohne die Vorschubgeschwindigkeit der Bearbeitungsstrasse zu verkuerzen.

Dies wird erreicht durch einen besonderen Transfertisch, der zwischen der Schleifmaschine und der Bohrmaschine zwischengelegt ist, wobei die vom Schleifen herkommenden Platten auf dem Transfertisch nach und nach abgeladen werden, und von diesem zu der Bohrmaschine nach und nach bei einer solchen Geschwindigkeit zugefuehrt werden, dass die bei der Zufuehrung jeder Platte zu der Bohrmaschine gesparte Zeit der Zeit der Bohrung jeder Platte entspricht, so dass die Vorschubgeschwindigkeit der Strasse unveraenderlich bleibt.

Die Erfindung wird nachstehend anhand der Zeichungen naeher beschrieben. Es zeigen:
Figur 1: vereinfachtes Blockschema der kontinuierlichen Strasse,
Figur 2: Draufsicht und Frontansicht des Transfertisches fuer die Zufuehrung der Platten,
Figur 3: Gesamtansicht der Bohrmaschine,
Figur 4: Draufsicht und Frontansicht der Bohrmaschine,
Figur 5: Detail der Bohrmaschine (Auflage der Platte)

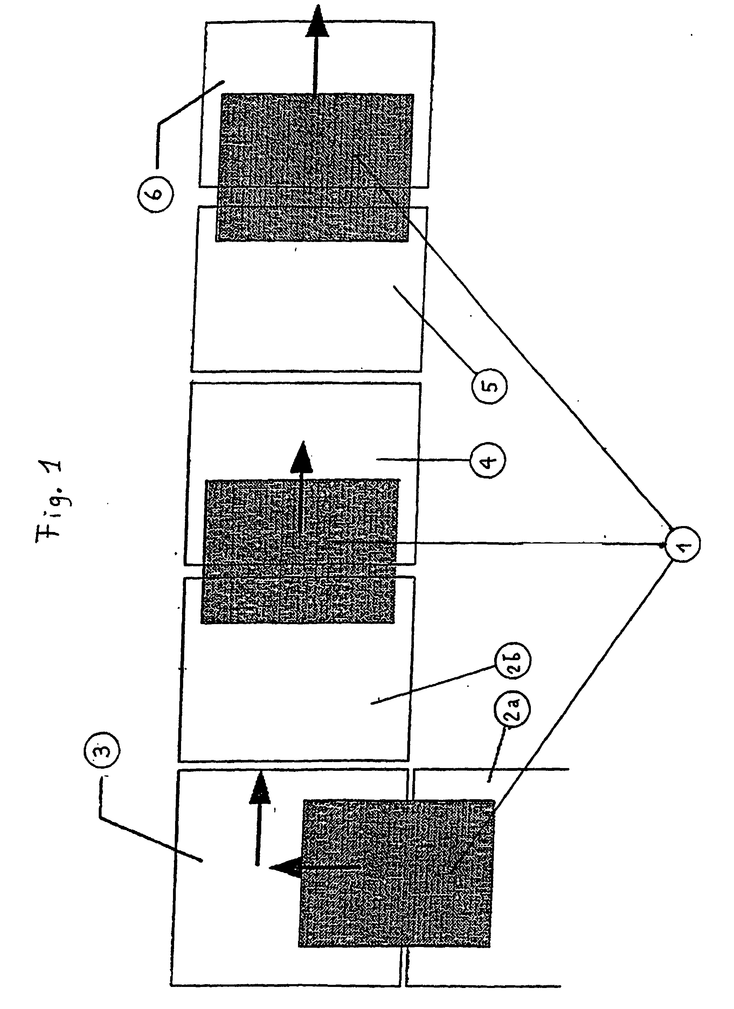

In Figur 1 ist ein vereinfachtes Blockschema der kontinuierlichen Strasse dargestellt, auf der sich die mit schattierten Oberflaechen dargestellten Glasplatten 1 in der Pfeilrichtung bewegen. Die Strasse besteht aus : zwei zweiseitigen Schleifmaschinen 2a und 2b, einem Transfertisch 3 zum Richtungwechsel , einem Transfertisch 4 fuer die Zufuehrung der Platten , der Bohrhmaschine 5 und der Waschmaschine 6.

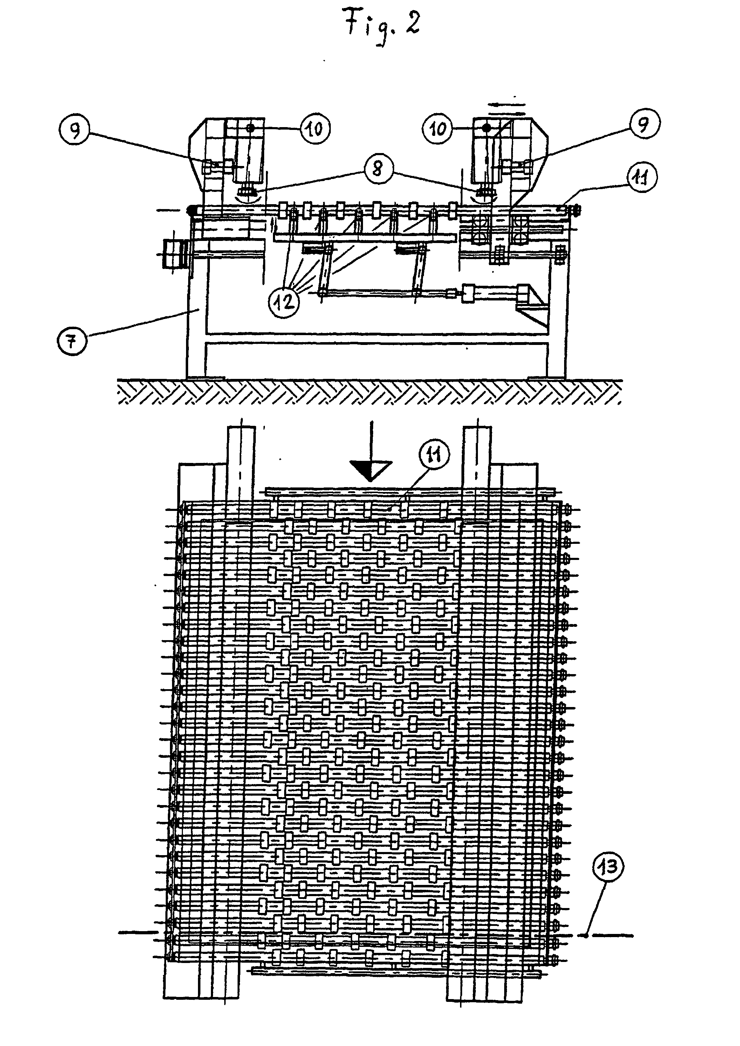

In Figur 2 ist der Transfertisch 4 fuer die Zufuehrung der Platten dargestellt, der im wesentlichen aus einer Grundplatte 7, aus zwei Reihen.

Unterstützungs-und Verstellungstriebräder aus Gummi mit vertikal angeordneter Rotationsachse und mit einem radial vorstehenden Rand zur Unterstützung und Ausrichtung der Platte besteht, wobei diese Triebräder eine erste Vorschubebene der Platte darstellen und wobei die zwei Reihen Triebräder (8) durch Kolbenantrieb (9) um Scharniere (10) drehend geöffnet werden, weiterhin besteht die Anlage aus einer Ebene von Triebwalzen (11), die eine zweite höhenversetzte Vorschubebene darstellt, und aus einer Ebene von Freirädern (12), die senkrecht von der Höhe der zweiten Vorschubebene umgekehrt verschiebbar ist.

Der Transfertisch 4 fuer die Zufuehrung der Platten ist mit einem Anzeiger der Stellung der Platten ausgestattet, in einer Stellung der ersten Vorschubebene (Null-Linie 13) fuer den Betrieb des Vorschubes der Platten selbst.

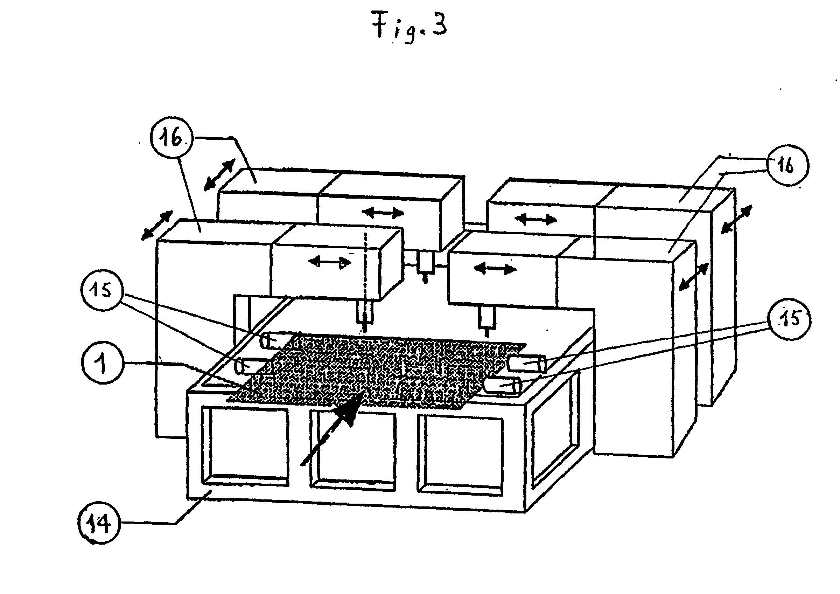

In Figur 3 ist eine vereinfachte Ansicht der Bohrmaschine 5 dargestellt, die im wesentlichen aus einer Grundstuetze 14, aus einer Triebraederebene 15 besteht, die die Verlaengerung der Hoehe und der Vorschubweise der Treibrollenebene 11 des Transfertisches 4 fuer die Zufuehrung der Platten darstellt, auf dem sich die Glasplatte 1, die in Figur schattiert dargestellt ist, in Pfeilrichtung vorwaertsbewegt; die Bohrmaschine besteht ausserdem aus beweglichen Bohrungskoepfen 16, die parallel und sekrecht zur Vorschubrichtung der Platte 1 bewegbar sind.

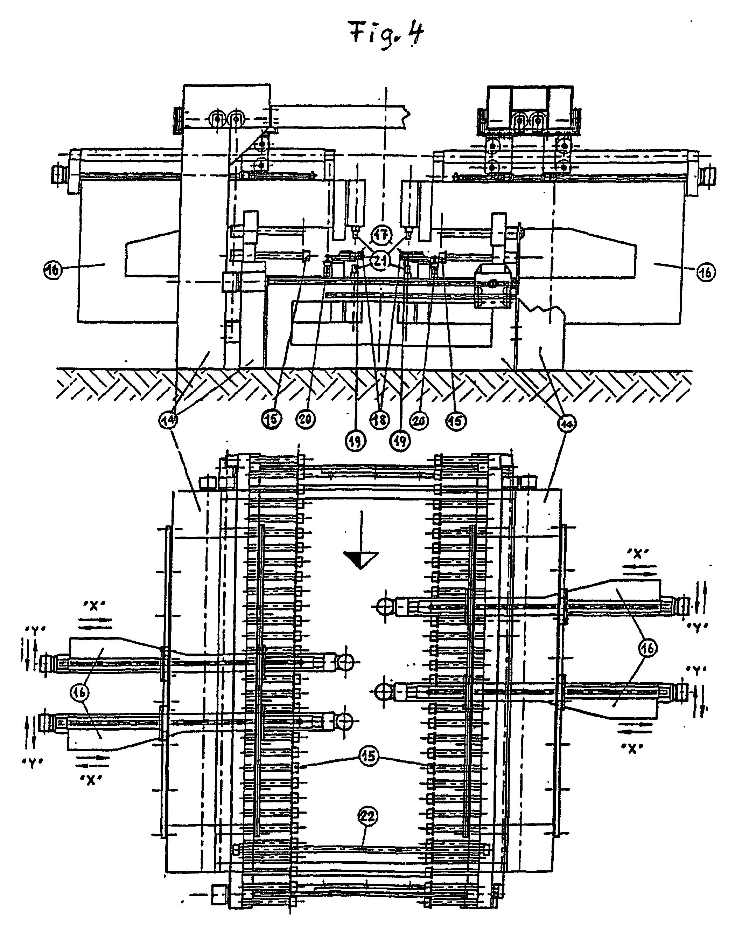

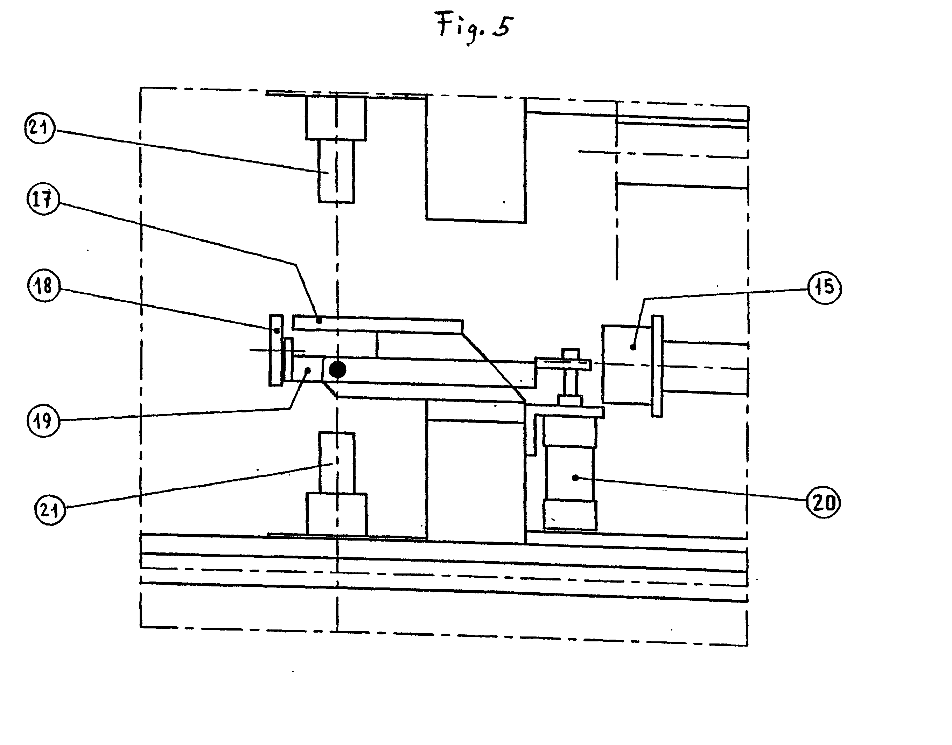

In Figuren 4 und 5 ist eine Bohrmaschine 5 naeher dargestellt. In Figur 4 sind die beweglichen Bohrungskoepfe 16 dargestellt, die in der Lage sind sich orthogonal zur Vorschubrichtung der Platten in Richtung zweier Achsen X und Y entlang zu verschieben und, die den Plattenseiten gegenueber verteilt sind, zum Beispiel zwei auf der rechten Seite und zwei auf der linken Seite oder mehr, wenn die Koepfe insgesamt mehr als vier sind, und die jeweils in die Bohrstellung mittels einer Programmiereinheit einschwenkbar sind, die deren Verschiebungen an den Achesen X und Y ansteuert ; in Figur 4 ist die Grundstuetze 14 weiterhin dargestellt, die im oberen Teil alle mechanische Elemente zum Positionieren der beweglichen Bohrungskoepfe 16 auf die Bohrstellen , was die Wartung des mechnischen Teiles der Bohrmaschine erleichtert, und die Treibraeder 15 aufweist, die bereift sind und einen Rand besitzen, dessen Aufgabe ist , die Platten waehrend des Vorschubes ausgerichtet zu halten, wobei die Bohrebenen der beweglichen Bohrkoepfe 16 eine Stuetzungsebene 17 und zwei bereifte Freiraeder 18 aufweisen, die auf einem Arm 19 angebracht sind, der durch einen Kolben 20 betrieben wird, was den Durchgang der Platte erleichtert, unter Aufhebung der Biegung in der Mitte, wobei die Raeder unter die Arbeitsebene, vor dem Beginn der Bohrung, absenken und erlauben, dass die Platte vollkommen auf der Stuetzungebene 17 aufliegt und deshalb erlaubt , dass die Bohrer 21 in den besten Bedingungen arbeiten.

Die Bohrmaschine 5 ist mit einem Anzeiger der Stellung der Platten in einer Stellung der Ebene der Treibraeder 15 (Null-Linie 22)ausgestattet, die den Vorschub der Platten selbst steuern.

In Figur 5 ist eine Explosionszeichnung der Auflageebene 17 und der mechanischen Elemente, die die Unterstuezung und die Bohrung der Platte betreffen, deren Funktionen schon frueher beschrieben wurden.

Ein besonderes Merkmal der Bohrmaschine 5 besteht darin, dass die beweglichen Bohrungskoepfe 16 uebereinandergelegt sind und je zwei Spindeln aufweisen, wobei die eine Spindel zur Bohrung der oberen Flaeche und die andere Spindel zur Bohrung der unteren Flaeche der Platte dient und schwanhalsartig ausgebildet sind. Ein weiteres , besonderes Merkmal der Bohrmaschine besteht darin , dass es die Bohrungsebene mit den Treibraedern 15 erlaubt , Loecher auch auf den Raendern durzufuehren, da es moeglich ist, die Triebraeder 15 an der Stelle zu entfernen, an der das Glas gebohrt werden muss, falls dieses Loch in der Naehe des Randes oder am Rande selbst (halbes Loch oder dergleichen) durchgefuehrt werden soll.

Ein Merkmal der Anlage besteht weiterhin darin, dass , sowohl im Transfertisch 4 fuer die Zufuehrung der Platten als auch in der Bohrmaschine 5, der Abstand zwischen den Antriebslinien , die jeweils mit den Triebraedern 8 und mit den Triebraedern 15 durchgefuehrt sind, veraenderlich ist und durch eine allgemeine Steuertafel eingestellt werden und auf das Mass der Platten gebracht werden kann, so dass der Transfertisch 4 fuer die Zufuehrung der Platten und die Bohrmaschine 5 an den Wechsel des Masses der aus anderen Maschinen der Strasse kommenden Platten, oder der manuell oder automatisch auf den Trasfertisch 4 fuer die Zufuehrung der Platten beladenen Platten, schnell angepasst werden koennen. Ein weiteres Merkmal der Anlage besteht darin, dass die elektronische Programmiereinheit sowohl den Transfertisch 4 fuer die Zufuehrung der Platten als auch die Bohrmaschine 5 ansteuert.

Die Betriebsweise der Strasse erfolgt wie nachstehend beschrieben. Auf dem Transfertisch 4 fuer die Zufuehrung der Platten , wird die Platte durch zwei Reihen Triebraeder 8 verschoben, bis sie eine Null-Linie 13 erreicht: sobald sie diese Linie erreicht, oeffnet ein Antrieb die beiden Reihen Triebraeder 8 , wobei die durch Kolben 9 angesteuerten Triebraeder 8 um die Scharnieren 10 drehen.

Jetzt senkt die Platte herab, unter Hilfe der Ebene der Freiraeder 12 , die sie aus der Hoehe der Triebraeder 8 bis zur Hoehe der Triebwalzen 11 begleiten.

Jetzt fuehren die Triebwalzen 11 die Platte zu den Triebraedern 15 der Bohrmaschine 5 bei einer sehr hohen Geschwindigkeit, so dass die Platte die Bohrungstelle sehr schnell erreicht. Waehrend die Platte die Bohrungstelle erreicht, werden die beiden Reihen Triebraeder 8 des Transfertisches 4 fuer die Zufuehrung der Platten in der Arbeitsstelle wieder geschlossen und erhalten, bei der gleichbleibenden Geschwindigkeit der Fertigungsstrassen, eine naechste Platte.

In der Bohrmaschine 5 geht die mit ihren Raendern auf den Triebraedern 15 aufgehaengte Platte vorwaerts, aber sie weist im Mittelteil eine natuerliche Biegung auf, die, je nach der Dicke, veraenderlich ist und wegen deren die Platte mit den Auflageebenen 17 der Bohrer anstossen wuerde.

Um dies zu vermeiden weisen die die Auflageebenen 17 der Bohrer 21 der Bohrmaschinen die beiden bereiften Freiraeder 18 auf, welche - wenn im hochgelegten Zustand - den Eingang der Platte erleichtert. Wenn die Platte positioniert ist und wenn sie die Null-Linie 22 erreicht hat, geht der Antrieb des Hebels, der die bereiften Freiraeder 18 traegt, dem Antrieb der Bohrung voraus. Der Hebel 19 senkt ab, vom Kolben 20 betrieben, und die Platte erreicht die Auflageebene 17 auf der Bohrungsebene. Die Auflageebenenen 17 der einzelnen Bohrer 21 gewaehrleisten eine Auflagestelle der Platte im Mittelteil und halten sie vollkommen flach, was eine erforderliche Voraussetzung fuer eine einwandfreie Bohrung ist.

In Folge des gesandten Befehls an die beweglichen Bohrungskoepfe 16, die jeweils in der Bohrungstellung positioniert sind, fuehren die Bohrer 21 die Bohrungen gleichzeitig durch und, wenn der letzte Kopf den letzten Bohrungsablauf fertiggestellt hat, geht ein Befehl aus, der die Platte nach anderen Arbeitsmaschinen , oder einfach nach der Waschmaschine 6, wieder in Bewegung setzt, wie im Beispiel der Figur 1.

Falls das Aussmass von zwei nahegestellten Bohrkoepfen nicht erlaubt, zwei benachbarte Loecher durchzufuehren, da der Achsabstand zwischen denselben kleiner als der Aussmass von zwei benachbarten Koepfen ist, ist es moeglich, diese benachbarten Loecher durch die folgenden Massnahmen durchzufuehren:
- das Bohrungsprogramm wird durchgefuehrt, unter Ausschluss des benachbarten Loches oder der benachbarten Loecher ,
- nach der Durchfuehrung des ersten Teiles des Programms geht die Platte, um einen dem Achsabstand der fehlenden Loecher gleichen Abstand, vorwaerts. Wenn die Platte diese zweite Null-Linie erreicht hat, geht der Befehl aus, und der bewegliche Bohrungskopf 16 fuehrt dieses Loch aus. Verlangt die Stellung des benachbarten Loches nur eine Verschiebung auf der Achse X , so genuegt es, dass die Platte diese Verschiebung durchfuehrt. Sollt dagegen das Y Mass der Koordinaten dieses Loches veraendert sein, so bewirkt die Bohrmaschine 5 , mittels der elektronischen Programmierheinheit, dass der fuer diese Bohrung vorbestimmte Kopf die erforderliche Verschiebung durchfuehrt. Ist diese zweite Bohrung durchgefuehrt, so bewegt sich die Platte vorwaerts und kommt aus der Bohrmaschine 5 heraus.

## Patentansprüche

1. Anlage zur kontinuierlichen Bearbeitung und Bohrung von Glasplatten wobei die Bewegungsabläufe zentral gesteuert sind, **dadurch gekennzeichnet, dass** zwischen einer Schleifmaschine (2b) und einer Bohrmaschine (5) ein Transfertisch (4) angeordnet ist wobei die aus der Schleifmaschine (2b) kommenden Platten nach und nach auf dem Transfertisch (4) für die Zuführung der Platten abgeladen werden, und von diesem aus, bei höherer Geschwindigkeit, zu der Bohrmaschine (5) nach und nach zugeführt werden, so dass die bei der Zuführung jeder Platte zur Bohrmaschine (5) gesparte Zeit der Bohrungszeit jeder einzelnen Platte entspricht, derart dass die Vorschubgeschwindigkeit der kontinuierlichen Strasse unverändert bleibt, und dass der Transfertisch (4) für die Zuführung der Platten im wesentlichen aus einer Grundplatte (7), aus zwei Reihen Unterstützungs-und Verstellungstriebräder aus Gummi mit vertikal angeordneter Rotationsachse und mit einem radial vorstehenden Rand zur Unterstützung und Ausrichtung der Platte besteht, wobei diese Triebräder eine erste Vorschubebene der Platte darstellen und wobei die zwei Reihen Triebräder (8) durch Kolbenantrieb (9) um Scharniere (10) drehend geöffnet werden, weiterhin besteht die Anlage aus einer Ebene von Triebwalzen (11), die eine zweite höhenversetzte Vorschubebene darstellt, und aus einer Ebene von Freirädern (12), die senkrecht von der Höhe der zweiten Vorschubebene umgekehrt verschiebbar ist.

2. Anlage gemaess Anspruch 1, **dadurch gekennzeichnet, dass** die Bohrmaschine (5) aus beweglichen Bohrungskoepfen (16) besteht, die in der Lage sind, sich orthogonal zur Vorschubrichtung der Platten in Richtung zweier Achsen X und Y zu verschieben und die, den Seiten der Platten gegenueber, z.B. zwei auf der rechten Seite und zwei auf der linken Seite oder mehr, verteilt sind, falls die Koepfe insegsamt mehr als vier sind, wobei jeder Kopf in der Bohrungsstellung mittels einer elektronischen Programmiereinheit einschwenkbar ist, die deren Verschiebungen an den Achsen X und Y entlang steuert; die Bohrmaschine besteht ausserdem aus einer Grundplatte (14), die in ihrem oberen Teil alle mechanischen Elemente zur Einschwenkung der beweglichen Bohrkoepfe (16) in die Bohrstellen aufweist, und aus Triebraedern (15), die bereift sind und einen Rand aufweisen, dessen Aufgabe darin besteht, die Platten waehrend ihrer Vorwaertsbewegung auszurichten, wobei die Bohrebenen der beweglichen Bohrkoepfe (16) eine Auflageflaeche (17) und zwei bereifte Freiraeder (18) aufweisen, welche an einem durch einen Kolben (20) angetriebenen Arm (19) angebracht sind, die den Durchgang der Platte erleichtern, indem sie deren Biegung in der Mitte aufheben, und die unter die Arbeitsebene vor dem Beginn der Bohrung absenken, derart dass sie erlauben, dass die Platte an der Auflageebene (17) vollkommen aufliegen kann, und dass die Bohrer (21) somit unter den besten Bedingungen arbeiten koennen.

3. Anlage gemaess den Anspruechen 1 und 2 **dadurch gekennzeichnet, dass**, sowohl im Transfertisch (4) fuer die Zufuehrung der Platten als auch in der Bohrmaschine (5), der Abstand zwischen den jeweils mit den Triebraedern (8) und mit den Triebraedern (15) ausgefuehrten Triebstrassen, veraendert , von einer allgemeinen Steurtafel eingestellt und dem Mass der Platten angepasst werden kann, so dass sowohl der Transfertisch (4) fuer die Zufuehrung der Platten als auch die Bohrmaschine (5)dem Masswechsel der Platten schnell angepasst werden koennen, welche aus anderen Maschinen der Strasse kommen, oder welche auf den Transfertisch (4) fuer die Zufuehrung der Platten manuell oder automatisch aufgeladen werden koennen.

4. Anlage nach dem Anspruch 2, **dadurch gekennzeichnet, dass** in der Bohrmaschine (5) die beweglichen Bohrkoepfe (16) mit gegenueberliegenden Koepfen ausgefuehrt sind, jeweils zwei Spindeln aufweisen - die eine Spindel zur Bohrung der oberen Flaeche und die andere zur Bohrung der unteren Flaeche der Platte - und schwanhalsartig ausgebildet sind.

5. Anlage nach den Anspruechen von 2 bis 4, **dadurch gekennzeichnet, dass** in der Bohrmaschine (5) die mit den Treibraedern (15) ausgefuehrte Bohrebene erlaubt, Bohrungen auch auf den Raendern durchzufuehren, da es moeglich ist, die Triebraeder (15), wo das Glas gebohrt werden soll , zu entfernen, wenn diese Bohrung in der Naehe des Randes oder an dem Rande selbst (halbe Bohrung oder dergleichen) durchgefuehrt werden soll.

6. Anlage nach dem Anspruch 2, **dadurch gekennzeichnet, dass** die Bohrmaschine (5) derart ausgestaltet ist, dass - falls der Raumbedarf von zwei angenaehrten, beweglichen Bohrkoepfen (16) es nicht erlaubt, zwei naheliegende Bohrungen durchzufuehren, da der Achsabstand zwischen denselben kleiner als der Raumbedarf der zwei angenaehrten Koepfe ist - es moeglich ist, diese Bohrungen angenaehrt durchzufuehren, wobei das Bohrungprogramm, mit Ausnahme der Bohrung oder der angenaehrten Bohrungen, durchgefuehrt wird, wobei ein neuer Vorschub der Platte, um eine dem Achsabstand zwischen den schon durchgefuehrten Bohrungen und der oder den noch fehlenden Bohrungen gleiche Strecke, erfolgt und wobei dann eine zweite Bohrung durchgefuehert wird.

## Claims

1. Plant for the continuous processing and drilling of glass panels, the sequences of movements being controlled centrally, **characterized in that** a transfer table (4) is arranged between a grinding machine (2b) and a drilling machine (5), the panels coming from the grinding machine (2b) gradually being unloaded on the transfer table (4) for feeding the panels and, starting from this transfer table (4), being gradually fed at a relatively high speed to the drilling machine (5), so that the time saved during the feeding of each panel to the drilling machine (5) corresponds to the drilling time of each individual panel in such a way that the feed rate of the continuous line remains unchanged, and **in that** the transfer table (4) for feeding the panels essentially comprises a base plate (7) and two rows of rubber supporting and adjusting driving wheels having a vertically arranged axis of rotation and a radially projecting rim for supporting and orienting the panel, these driving wheels constituting a first feed plane of the panel, and the two rows of driving wheels (8) being opened in a rotary manner about hinges (10) by a piston drive (9), and furthermore the plant consists of a plane of driving rollers (11), which constitute a second vertically offset feed plane, and of a plane of freewheels (12), which are displaceable perpendicularly from the level of the second feed plane up to the level of the first feed plane and vice versa.

2. Plant according to Claim 1, **characterised in that** the drilling machine (5) consists of movable drilling heads (16) which are capable of being displaced orthogonally to the feed direction of the panels in the direction of two axes X and Y and which are distributed opposite the sides of the panels, e.g. two on the right-hand side and two on the left-hand side, or more, if there are more than a total of four heads, each head being capable of being swung into the drilling position by means of an electronic programming unit which controls its displacements along the axes X and Y; the drilling machine also consists of a base plate (14), which in its top part has all the mechanical elements for swinging the movable drilling heads (16) into the drilling locations, and of driving wheels (15) which are tyred and have a rim whose task is to orient the panels during their forwards movement, the drilling planes of the movable drilling heads (16) having a supporting surface (17) and two tyred freewheels (18) which are attached to an arm (19) which is driven by a piston (20), which freewheels (18) facilitate the passage of the panel by neutralizing its deflection in the centre and descend below the working plane before the start of drilling in such a way that they enable the panel to be completely supported on the supporting plane (17) and that the drills (21) can thus work under the best conditions.

3. Plant according to Claims 1 and 2, **characterized in that**, both in the transfer table (4) for feeding the panels and in the drilling machine (5), the distance between the driving lines realized respectively with the driving wheels (8) and with the driving wheels (15) can be set by a general control panel and adapted to the size of the panels, so that both the transfer table (4) for feeding the panels and the drilling machine (5) can be quickly adapted to the change in size of the panels which come from other machines of the line or which can be loaded manually or automatically onto the transfer table (4) for feeding the panels.

4. Plant according to Claim 2, **characterized in that**, in the drilling machine (5), the movable drilling heads (16) are realized with opposite heads, in each case have two spindles - the one spindle for drilling the top surface and the other for drilling the bottom surface of the panel - and are of swanneck-like design.

5. Plant according to Claims 2 to 4, **characterized in that**, in the drilling machine (5), the drilling plane realized with the driving wheels (15) enables drill holes to also be made on the margins, since it is possible to remove the driving wheels (15) where the glass is to be drilled if this drill hole is to be made in the vicinity of the margin or at the margin itself (a half drill hole or the like).

6. Plant according to Claim 2, **characterized in that** the drilling machine (5) is configured in such a way that - if the space required by two movable drill heads (16) brought closer together does not allow two adjacent drill holes to be made, since the centre distance between the same is smaller than the space required by the two heads brought closer together - it is possible to make these drill holes closer together, the drilling programme being carried out with the exception of the drill hole or of the drill holes brought closer together, a new feed of the panel being effected by a distance identical to the centre distance between the drill holes already made and the drill hole or the drill holes still absent, and a second drill hole then being made.

## Revendications

1. Installation pour le traitement et perçage continus de feuilles de verre avec commande centrale des mouvements, **caractérisée en ce qu'**une table de transfert (4) est située entre une meuleuse (2b) et une perceuse (5), les feuilles venant de la meuleuse (2b) étant successivement déchargées sur la table de transfert (4) servant à l'amenée des feuilles et successivement amenées à la perceuse (5), à plus grande vitesse et au départ de ladite table, de manière que le temps économisé à l'amenée de chaque feuille à la perceuse (5) correspond au temps de perçage de chaque feuille, la vitesse d'avancement de la chaîne de finition continue restant invariable et la table de transfert (4) servant à l'amenée des feuilles étant composée, pour l'essentiel, d'une plaque de base (7), de deux séries de roues motrices d'appui et de déplacement en caoutchouc avec un axe de rotation vertical et un bord faisant radialement saillie pour supporter et centrer la feuille, lesdites roues motrices constituant un premier niveau d'avancement de la feuille et les deux séries de roues motrices (8) étant ouvertes sous l'action d'un piston (9), en tournant autour de charnières (10), l'installation comprenant par ailleurs un niveau de rouleaux moteurs (11) constituant un deuxième niveau d'avancement à une hauteur différente et un niveau de roues libres (12), lequel est déplaçable verticalement en sens inverse depuis la hauteur du deuxième niveau d'avancement

2. Installation selon la revendication 1, **caractérisée en ce que** la perceuse (5) est composée
- de têtes perceuses mobiles (16), capables de se déplacer orthogonalement par rapport à la direction d'avancement des feuilles dans la direction de deux axes X et Y et réparties en vis-à-vis par rapport aux côtés des feuilles, soit, par exemple, deux sur le côté droit et deux sur le côté gauche, ou plus, au cas où le nombre de têtes est au total supérieur à quatre, chaque tête pouvant être amenée en position de perçage par pivotement à l'aide d'une unité électronique de programmation, qui en commande les déplacements le long des axes X et Y;
- d'une plaque de base (14) présentant, en sa partie supérieure, tous les éléments mécaniques requis pour faire pivoter les têtes perceuses mobiles (16) de manière à les amener en position de perçage;
- de roues motrices (15) pourvues de pneus et d'un bord servant à centrer les feuilles pendant qu'elles avancent,
les niveaux de perçage des têtes perceuses mobiles (16) présentant une surface portante (17) et deux roues libres (18) pourvues de pneus et montées sur un bras (19) actionné par un piston (20), lesquelles facilitent le passage de la feuille en supprimant leur courbure au centre et descendent, avant le commencement du perçage, en dessous du plan de travail de manière que la feuille peut prendre parfaitement appui sur la surface portante (17) et que les forets (21) peuvent ainsi travailler dans les meilleures conditions.

3. Installation selon les revendications 1 et 2, **caractérisée en ce que**, tant dans la table de transfert (4) servant à l'amenée des feuilles que dans la perceuse (5), la distance entre les chaînes d'entraînement réalisées respectivement avec les roues motrices (8) et les roues motrices (15) peut être modifiée, réglée par une table de commande générale et adaptée à la dimension des feuilles, de sorte que la table de transfert (4) servant à l'amenée des feuilles et la perceuse (5) peuvent être adaptées rapidement au changement de dimension des feuilles venant d'autres machines de la chaîne de finition ou mises manuellement ou automatiquement sur la table de transfert (4) servant à l'amenée des feuilles

4. Installation selon la revendication 2, **caractérisée en ce que** les têtes perceuses mobiles (16) de la perceuse (5) sont réalisées avec des têtes qui se font vis-à-vis, **en ce que** lesdites têtes perceuses présentent chacune deux broches, l'une pour le perçage de la face supérieure et l'autre, pour le perçage de la face inférieure de la feuille, et **en ce que** ces têtes perceuses sont réalisées sous la forme de col de cygne

5. Installation selon les revendications 2 à 4, **caractérisée en ce que**, dans la perceuse (5), le niveau de perçage constitué par les roues motrices (15) permet de réaliser des perçages y compris sur les bords, étant donné qu'il est possible de retirer lesdites roues motrices (15) à l'endroit où il s'agit de percer le verre, dans la mesure où ce perçage est censé être réalisé à proximité du bord ou sur le bord lui-même (demi-perçage et autres perçages de ce genre)

6. Installation selon la revendication 2, **caractérisée en ce que** la perceuse (5) est réalisée de manière que, dans la mesure où l'encombrement de deux têtes perceuses mobiles (16) rapprochées ne permet pas de réaliser deux perçages rapprochés du fait que la distance d'axe de perçage en axe de perçage est inférieure à l'encombrement des deux têtes rapprochées, il est néanmoins possible de réaliser lesdits perçages rapprochés par exécution du programme de perçage à l'exception du perçage ou des perçage rapprochés, suivie d'un nouvel avancement de la feuille sur une distance égale à l'entraxe entre les perçages déjà réalisés et le ou les perçages à réaliser, un deuxième perçage étant ensuite réalisé
